# EUROPÄISCHE PATENTANMELDUNG

(11) **EP 4 468 276 A1**
(43) Veröffentlichungstag der Anmeldung: **27.11.2024**
(21) Anmeldenummer: 24176958.7
(22) Anmeldetag: 21.05.2024
(51) Int. Cl.: G09B 23/30

(54) **STABILISIERUNGSSYSTEM FÜR EINEN DUMMY**

(30) Priorität: 23.05.2023 DE 102023113446
(71) Anmelder: 4Activesystems GmbH, 8772 Traboch (AT)
(72) Erfinder: Fritz, Martin, 8723 Kobenz (AT); Wimmer, Thomas, 9313 St. Georg am Längsee (AT)
(74) Vertreter: Dilg, Haeusler, Schindelmann Patentanwaltsgesellschaft mbH

(57) **Zusammenfassung**

Die vorliegende Erfindung betrifft eine Vorrichtung (100) zum Stabilisieren eines Dummys (120) auf einer, insbesondere statischen oder verfahrbaren, Plattform (130). Die Vorrichtung (100) weist ein Stabilisierungselement (101) auf, welches an mindestens einem Fixierungspunkt (121) des Dummys (120), der auf der Plattform (130) fixiert ist, befestigbar ist, wobei der Fixierungspunkt (121) an dem Dummy (120) beabstandet zu der Plattform (130) ausbildbar ist. Ferner weist die Vorrichtung (100) eine Kopplungsvorrichtung (102) auf, welche mit dem Stabilisierungselement (101) befestigt ist, wobei die Kopplungsvorrichtung (102) ein Kopplungselement aufweist, welches eine lösbare Befestigung des Stabilisierungselements (101) zwischen dem Dummy (120) und der Plattform (130) ausbildet.

## Beschreibung

### Technisches Gebiet

Die vorliegende Erfindung betrifft eine Vorrichtung und ein Verfahren zum Stabilisieren eines Dummys auf einer verfahrbaren Plattform. Ferner betrifft die vorliegende Erfindung ein Dummy-System. Eine entsprechende verformbare Plattform.

### Hintergrund der Erfindung

In der modernen Fahrzeugtechnik kommen mehr und mehr Assistenzsysteme zum Einsatz, welche aktiv die Umgebung des Fahrzeugs überwachen und passiv oder aktiv in die Steuerung des Fahrzeugs eingreifen. Insbesondere müssen Assistenzsysteme zur Umsetzung des autonomen Fahrens ausgiebig getestet werden. Assistenzsysteme müssen daher vollumfänglichen Tests unterzogen werden, um Fehleinschätzungen der Assistenzsysteme zu unterbinden.

Um eine realitätsnahe Verkehrssituationen zu simulieren, werden eine Vielzahl von verschiedenen Dummys in einem Testszenarios bewegt, um zu testen, ob mittels der Assistenzsysteme die Verkehrssituation korrekt gemessen und bestimmt wird. Entsprechend können die Dummys beispielsweise aus Fahrzeugen selbst, wie beispielsweise Kraftfahrzeuge, Motor wieder oder LKWs, darstellen aber auch Menschen oder Tiere. Die Dummys werden dabei auf verfahrbaren Plattformen lösbar montiert. Die Plattformen werden entsprechend in ihrer Bewegung und Richtung gesteuert, um beispielsweise ein fahrendes Auto oder eine gehende Person als Dummy zu simulieren. Damit das Risiko von Fehlmessungen der Assistenzsysteme reduziert wird, ist es ein Anliegen, die Plattformen möglichst schmal und klein auszubilden. Dies geht jedoch oftmals zulasten der dynamischen Stabilität der Dummy-Systeme, insbesondere bei schnellem Richtungswechsel.

### Darstellung der Erfindung

Es ist eine Aufgabe der vorliegenden Erfindung, ein Dummy System bereitzustellen, welches das Risiko von Fehlmessungen reduziert und eine hohe dynamische Stabilität, insbesondere bei schnellem Richtungswechsel, aufweist.

Diese Aufgabe wird mit einer Vorrichtung und ein paar Fragen zum Stabilisieren eines Dummys auf einer verfahrbaren Plattform gemäß den Gegenständen der unabhängigen Ansprüche gelöst.

Gemäß einem ersten Aspekt der vorliegenden Erfindung wird eine Vorrichtung zum Stabilisieren eines Dummys auf einer, insbesondere statischen oder verfahrbaren, Plattform beschrieben. Die Vorrichtung weist ein Stabilisierungselement auf, welches an mindestens einem Fixierungspunkt des Dummys, der auf der Plattform fixiert ist, befestigbar ist, wobei der Fixierungspunkt an dem Dummy (insbesondere vertikal) beabstandet zu der Plattform ausbildbar ist. Ferner weist die Vorrichtung eine Kopplungsvorrichtung, welche mit dem Stabilisierungselement befestigt ist, auf, wobei die Kopplungsvorrichtung ein Kopplungselement aufweist, eine lösbare Befestigung des Stabilisierungselements zwischen dem Dummy und der Plattform ausbildet.

Gemäß einem weiteren Aspekt der vorliegenden Erfindung wird ein Dummy-System beschrieben, dass eine, insbesondere statische oder verfahrbare Plattform, einen Dummy, welcher auf der Plattform befestigt ist, sowie die oben beschriebene Vorrichtung aufweist. Das Stabilisierungselement ist dabei an dem Fixierungspunkt des Dummys befestigt, wobei das Kopplungselement eine lösbare Befestigung des Stabilisierungselements zwischen dem Dummy und der Plattform ausbildet.

Gemäß einem weiteren Aspekt der vorliegenden Erfindung wird eine Plattform für ein oben beschriebenes Dummy-System beschrieben. Die Plattform weist eine bodennahe Seite, eine Oberseite, an welcher der Dummy befestigbar ist, und eine Randseite, welche die bodennahe Seite und die Oberseite verbindet, auf. Die bodennahe Seite und/oder die Randseite weisen einen Aufnahmeabschnitt, insbesondere eine Einkerbung, zum lösbaren Aufnehmen des Kopplungselement auf.

Gemäß einem weiteren Aspekt wird ein Verfahren zum Stabilisieren eines Dummys auf einer, insbesondere statischen oder verfahrbaren, Plattform beschrieben. Das Verfahren weist ein Befestigen eines Stabilisierungselements an mindestens einem Fixierungspunkt des Dummys, der auf der Plattform fixiert ist, auf, wobei der Fixierungspunkt an dem Dummy beabstandet zu der Plattform vorliegt. Ferner weist das Verfahren ein Befestigen einer Kopplungsvorrichtung mit dem Stabilisierungselement auf. Ferner weist das Verfahren ein lösbares Befestigen des Stabilisierungselements zwischen dem Dummy und der Plattform mittels eines Kopplungselements der Kopplungsvorrichtung.

Der Dummy kann beispielsweise ein Radfahrer, Motorradfahrer, Mopedfahrer oder ein dreispuriges Fahrzeug darstellen. Beispielsweise an der Dummy ebenfalls ein Kraftfahrzeug wie beispielsweise eine PKW oder einen LKW darstellen. Ferner kann der Dummy eine menschliche Person oder ein Tier, insbesondere ein Haustier, darstellen.

Die Plattform kann statisch, d.h. unbeweglich auf einem Boden platziert werden. In einer beispielhaften Ausführungsform weist die Plattform an der bodennahen Seite ein Rollenelement zum Rollen der Plattform über einem Boden auf und ist somit verfahrbar ausgebildet. Die Plattform weist den Grundkörper auf, welcher eine plattenähnliche Form ausbildet. Dies bedeutet, dass seine Erstreckung innerhalb einer Bodenebene deutlich größer ist als seine Dicke in zum Beispiel vertikaler Richtung. Der Grundkörper weist dabei eine Bodenfläche bzw. eine bodennahe Seite und eine gegenüberliegende Oberseite als Befestigungsfläche für den Dummy auf. In der Bodenfläche ist das zumindest ein Rollenelement z.B. antreibbar angeordnet, welches zumindest teilweise aus dem Grundkörper hinausragt und somit einen Abstand zwischen Grundkörper und Boden bereitstellt. Auf der Befestigungsfläche ist der Dummy befestigbar.

Die erfindungsgemäße Vorrichtung weist insbesondere ein Stabilisierungselement auf, welches an einem Fixierungspunkt des Dummys, unlösbar oder lösbar, befestigbar ist. Ferner kann das Stabilisierungselement an der Kopplungsvorrichtung befestigt sein, womit eine, lösbare oder unlösbare, Fixierung an der Plattform und/oder des Dummys ausgebildet ist. Das Stabilisierungselement kann beispielsweise eine Haltestange ausbilden. Insbesondere kann Stabilisierungselement ein zugkraftübertragendes Element, wie beispielsweise ein Seil oder ein Draht darstellen. Insbesondere kann das Stabilisierungselement in seiner Länge verstellbar sein und beispielsweise in einem vorgespannten Zustand zwischen dem Dummy und der Plattform befestigt werden. Mit anderen Worten zieht das Stabilisierungselement den Dummy mit einer gewissen Vorspannung zur Plattform.

Die Kopplungsvorrichtung befestigt das Stabilisierungselement lösbar an die Plattform, den Dummy und/oder verbindet zwei Stabilisierungsteile des Stabilisierungselement lösbar miteinander. Die Kopplungsvorrichtung weist dazu ein Kopplungselement auf. Das Kopplungselement kann beispielsweise ein mechanisches Kopplungselement, wie das unten näher beschriebene Hackenelement, aufweisen. Ferner kann das Kopplungselement eine Magnetvorrichtung aufweisen, wobei mittels magnetischen Kräften das Kopplungselement an die Plattform, den Dummy oder die Stabilisierungsteile (Seil- oder Stangenteile) selbst lösbar befestigt werden kann. Hierzu können beispielsweise Elektromagnete eingesetzt werden, die eine entsprechende Kopplung steuern.

Der Fixierungspunkt des Dummys, an welchen das Stabilisierungselement befestigt ist, ist insbesondere beabstandet zu der Plattform (mit anderen Worten vertikal beabstandet zu der Plattform, wenn diese auf dem Boden aufgelegt ist) ausgebildet. Neben der erfindungsgemäßen Vorrichtung ist der Dummy mit einer Dummybefestigung an der Plattform fixiert. Der Fixierungspunkt mit dem Stabilisierungselement ist insbesondere horizontal, d.h. entlang einer Richtung parallel zur Befestigungsoberfläche der Plattform, beabstandet von der Dummybefestigung, mit welcher der Dummy an der Plattform befestigt ist, vorgesehen. Somit kann ein Schwanken bzw. ein Moment des Dummys um dessen Dummybefestigung mit der Plattform mittels des Stabilisierungselements gefedert bzw. aufgenommen werden. Mit anderen Worten ist das Stabilisierungselement derart mit dem Dummy gekoppelt, dass Kräfte resultierend aus einem Drehmoment des Dummys um die Dummybefestigung durch das Stabilisierungselement aufgenommen werden.

Somit kann insbesondere bei schnellen Richtungsänderungen der verfahrbaren Plattform, welche aufgrund der Beschleunigungskräfte und Verzögerungskräfte ein Moment um die Dummybefestigung erzeugen und somit zu einer Instabilität bzw. einem Schwanken des Dummys führen, durch das Stabilisierungselement aufgenommen werden. Selbst bei kleinflächigen Plattformen, die bei schnellen Richtungsänderungen zu einem Schwanken des Dummys führen, kann der Dummy durch die Stabilisierungsvorrichtung gemäß der vorliegenden Erfindung fest an der Plattform gehalten werden.

Mittels der lösbaren Befestigung des Stabilisierungselements, beispielsweise eines Seils oder einer Stange, zwischen dem Dummy und der Plattform, kann der Dummy derart lösbar an der Plattform befestigt werden, dass im Falle einer Kollision sich die Befestigung gelöst und das Risiko einer Zerstörung des Dummys reduziert wird. Hierfür kann die lösbare Befestigung an verschiedenen Stellen zwischen dem Dummy und der Plattform bereitgestellt werden. Beispielsweise kann das Kopplungselement, beispielsweise ein lösbarer Haken oder eine andere beschriebene lösbare Kopplung, der Kopplungsvorrichtung lösbar an der Plattform und/oder lösbar an dem Dummy befestigt werden.

In einer alternativen oder zusätzlichen Ausführungsform kann das Stabilisierungselement, beispielsweise ein Seil oder eine Stange, einen ersten Stabilisierungsteil (ein erster Seilabschnitt oder Stangenabschnitt), welcher mit der Plattform (lösbar oder unlösbar) befestigt ist, und einen zweiten Stabilisierungsteil (ein zweiter Seilabschnitt oder Stangenabschnitt) aufweist, welcher mit dem Dummy (lösbar oder unlösbar) befestigt ist, aufweisen. Das Kopplungselement ist zwischen dem ersten Stabilisierungsteil und dem zweiten Stabilisierungsteil angeordnet und koppelt beide Stabilisierungsteile lösbar miteinander. Beispielsweise kann das Kopplungselement eine lösbare Seilkopplung oder Stangenkopplung darstellen. Dies kann beispielsweise ebenfalls durch ein beschriebenes Hackenelement oder durch eine entsprechende magnetische Kopplung.

Gemäß einer weiteren beispielhaften Ausführungsform weist das Kopplungselement ein Hackenelement auf, welches insbesondere an einer Randseite der Plattform oder an einer bodennahen Seite der Plattform befestigbar ist. Das Hackenelement greift entsprechend teilweise einen Rand der Plattform, sodass Zugkräfte, welche insbesondere in vertikaler Richtung bzw. in Richtung der Normalen der Oberseite der Plattform wirken, durch das Hackenelement in die Plattform übertragen werden können. Das Hackenelement kann ferner in einfacher Art und Weise von der Plattform gelöst werden, ohne dass zusätzliche Befestigungsmittel, wie beispielsweise Schraubenverbindungen etc. gelöst werden müssen.

In einer beispielhaften Ausführungsform kann das Hackenelement auch am Dummy mittels des Koppelelements lösbar befestigt werden. Plattformseitig kann das Stabilisierungselement beispielswese fest fixiert sein oder ebenfalls lösbar, beispielsweise mittels eines weiteren Hakenelements, das insbesondere an der Randseite der Plattform oder an der bodennahen Seite der Plattform lösbar befestigbar ist.

Gemäß einer weiteren beispielhaften Ausführungsform mit das Hackenelement elastisch verformbar ausgebildet. Ferner kann das Hakenelement insbesondere aus einem Federstahl, aus Kunststoff oder aus einem Faserverbundwerkstoff (z.B. glasfaserverstärkter Kunststoff (GFK), carbonfaserverstärkter Kunststoff (CFK) oder Aramidfaserverstärkter Kunststoff (AFK)) ausgebildet sein. Durch die elastische Ausbildung des Hakenelements kann bei einer definierten Last bzw. Überlast (beispielsweise bei einer Kollision des Dummys) das Hakenelement gezielt und zerstörungsfrei von der Plattform gelöst werden. Durch Ausbildung des Hackenelements aus Kunststoff kann das Gewicht des Hackenelements reduziert werden. Im Falle eines Zusammenstoßes mit einem Testfahrzeug wird somit das Risiko von Beschädigungen, die aufgrund des gelösten Hackenelements entstehen könnten, reduziert, da das aus Kunststoff ausgebildet Hackenelement äußerst leicht ausgebildet ist.

Gemäß einer weiteren beispielhaften Ausführungsform weist das Hackenelement einen flächigen Kontaktbereich zur Kontaktierung mit der Plattform auf. Der Kontaktbereich ist derjenige Bereich, welcher in Kontakt mit der Plattform steht, wenn das Kopplungselement an der Plattform bestimmungsgemäß befestigt ist. Der flächige Bereich kann beispielsweise viereckig, rechteckig kreisförmig oder elliptisch ausgebildet sein. Insbesondere kann der Kontaktbereich eine Fläche von 1 cm², 2 cm² oder mehr aufweisen.

Gemäß einer weiteren beispielhaften Ausführungsform weist das Hackenelement im Kontaktbereich ein Schutzelement zum Schützen der Plattform auf, wobei das Schutzelement aus einem weicheren Material, insbesondere einem gummiartigen Material, als der Haken ausgebildet ist. Schutzelement kann beispielsweise ein elastisches Element, beispielsweise bestehend aus einem gummiartigen Material, aufweist. Ferner kann der Schutzelement eine aufgebaute Oberfläche aufweisen, welche rauer ist als die Oberfläche des Hackenelement. Somit kann ebenfalls verhindert werden, dass das Hackenelement einerseits die Plattform beschädigt und andererseits ein ungewolltes Lösen bzw. Herausrutschen des Hakens vorkommt.

Gemäß einer weiteren beispielhaften Ausführungsform weist das Hackenelement eine Befestigungsöse zum Befestigen des Stabilisierungselements auf. Das Stabilisierungselement, welches beispielsweise als Seil oder Draht ausgebildet ist, kann in einfacher Art und Weise durch die Befestigungsfläche geführt werden, um eine Befestigung zu erzeugen.

Gemäß einer weiteren beispielhaften Ausführungsform ist das Stabilisierungselement ein zugkraftübertragendes Zugelement, insbesondere ein Seil oder ein Draht, wobei insbesondere an einem Ende des Zugelements der Dummy fixierbar ist und an dem gegenüberliegenden Ende die Kopplungsvorrichtung fixierbar ist.

Beispielsweise kann das zugkrafttragende Zugelement aus Hanf oder Kunststoffen, wie beispielsweise Nylon, bestehen. Insbesondere kann das Zugelement transparent sein, sodass gerade bei Assistenzsystemen mit optischen Sensoren eine Fehlerkennung verhindert wird. Insbesondere kann das Zugelement aus radartransparenten Material bestehen, um ebenfalls das Risiko einer Fehlmessung der Fahrerassistenzsysteme zu reduzieren.

Gemäß einer weiteren beispielhaften Ausführungsform weist die Vorrichtung ein weiteres Stabilisierungselement auf, welches an einem weiteren Fixierungspunkt des Dummys, der auf der Plattform fixiert ist, befestigbar ist. Der weitere Fixierungspunkt liegt an dem Dummy beabstandet (insbesondere vertikal) die zu der Plattform vorliegt. Ferner weist die Vorrichtung eine weitere Kopplungsvorrichtung auf, welche mit dem weiteren Stabilisierungselement befestigt ist, wobei die weitere Kopplungsvorrichtung ein weiteres Kopplungselement aufweist, welches zum lösbaren Befestigen der weiteren Kopplungsvorrichtung an der Plattform ausgebildet ist.

In der beschriebenen Ausführungsformen wird hervorgehoben, dass die Vorrichtung eine Vielzahl von Stabilisierungselementen, wie beispielsweise eine Vielzahl von Seilen oder Drähten, aufweisen kann, die den Dummy an der Plattform halten. Die Stabilisierungselemente sind dabei insbesondere zugkraftübertragende Zugelemente. Somit kann beispielsweise um die Befestigungsvorrichtung des Dummys der Plattform eine Vielzahl von vorgespannten Zugelementen zwischen der Plattform und den jeweiligen Fixierungspunkt des Dummys gespannt werden, sodass eine robuste Fixierung des Dummys an der Plattform bereitgestellt werden kann.

Gemäß einer weiteren beispielhaften Ausführungsform der vorliegenden Erfindung sind das Stabilisierungselement und das weitere Stabilisierungselement an beabstandeten Fixierungspunkten an dem Dummy befestigbar. Ist der Dummy beispielsweise als menschlicher Körper ausgebildet, so kann beispielsweise ein Fixierungspunkt an der rechten Schulter und ein weiterer Fixierungspunkt an der linken Schulter ausgebildet werden. Entsprechend kann ein Stabilisierungselement zwischen der rechten Schulter und der Plattform vorgespannt werden und ein weiteres Stabilisierungselement zwischen der linken Schulter und der Plattform vorgespannt werden. Somit kann der Dummy stabil an der Plattform, auch bei Richtungsänderungen während der Bewegung der Plattform, gehalten werden.

Gemäß einer weiteren beispielhaften Ausführungsform sind das Stabilisierungselement und das weitere Stabilisierungselement an einem gemeinsamen Fixierungspunkt an dem Dummy befestigbar. Somit kann die Fixierung eines Bereichs, beispielsweise einer Schulter eines menschlichen Körpers als Dummy, verstärkt werden.

In einer weiteren beispielhaften Ausführungsform ist die Kopplungsvorrichtung und die weitere Kopplungsvorrichtung beabstandet voneinander an der Plattform befestigbar. Gleichzeitig können die an der Kopplungsvorrichtung und an der weitere Kopplungsvorrichtung befestigten Stabilisierungselement an einem gemeinsamen Fixierungspunkt am Dummy befestigt werden. Somit wird ein Kraftdreieck erzeugt, welches beispielsweise eine Zugkraft basierend auf einer Beschleunigung der Plattform von dem einen Stabilisierungselement aufgenommen wird und eine Zugkraft basierend auf einer Verzögerung der Plattform von dem weiteren Stabilisierungselement aufgenommen wird.

Gemäß einer weiteren beispielhaften Ausführungsform weist die Vorrichtung ein Befestigungselement zum, insbesondere lösbaren, Befestigen des Stabilisierungselements und des weiteren Stabilisierungselements an dem Fixierungspunkt des Dummys. Als Befestigungselement kann beispielsweise ein schlaufenförmiges Element aufweisen, welche einem Bereich des Dummys, beispielsweise einen Schulterbereich, teilweise umschließt. Das schlaufenförmige Element kann insbesondere geöffnet und geschlossen werden, beispielsweise mittels einem Reißverschluss oder einem Klettverschluss. Das Befestigungselement kann in einer beispielhaften Ausführungsform eine Befestigungsfläche aufweisen, welche einen Bereich des Dummys teilweise umschließt. Die Befestigungsfläche kann somit entsprechende Kräfte verteilt den Dummy einleiten, sodass das Risiko einer Beschädigung des Dummys im Falle einer Kollision reduziert wird.

Das Befestigungselement kann insbesondere aus einem radartransparenten Material und/oder einem optisch transparenten Material ausgebildet werden.

Gemäß einer weiteren beispielhaften Ausführungsform weist die Vorrichtung ein Verstärkungselement auf, welches zwischen dem Stabilisierungselement und dem weiteren Stabilisierungselement derart befestigt ist, dass ein Abstand zwischen dem Stabilisierungselement und dem weiteren Stabilisierungselement einstellbar ist. Das Verstärkungselement kann beispielsweise ein zugkraftübertragendes Element ausbilden, wie beispielsweise ein Seil oder ein Draht. Dabei kann das Verstärkungselement insbesondere entlang der Oberseite der Plattform zwischen zwei Stabilisierungselementen bzw. zwischen zwei Kopplungsvorrichtungen angeordnet werden. Somit wird beispielsweise ein Verrutschen der Kopplungselemente bzw. der Stabilisierungselemente verhindert, da wenn insbesondere die Kopplungsvorrichtung aufgrund einer Krafteinwirkung vergrößert wird, dass Verstärkungselement dem entgegenwirkt. Um auch eine Druckkraft bei Verkleinerung des Abstands zwischen zwei Kopplungsvorrichtungen bzw. Stabilisierungselementen zu verhindern, kann das Verstärkungselement beispielsweise als Haltestange ausgebildet werden.

Gemäß einer weiteren beispielhaften Ausführungsform kann das Verstärkungselement elastisch ausgebildet werden. Das Verstärkungselement kann beispielsweise aus einem gummiartigen Material, beispielsweise als Gummiexpander, ausgebildet werden.

Gemäß einer weiteren beispielhaften Ausführungsform weist das Verstärkungselement eine Feder, insbesondere eine Spiralfeder oder eine Schraubenfeder, derart auf, dass das Stabilisierungselement und das weiteren Stabilisierungselement elastisch beabstandet ist. So kann beispielsweise ein rigides Verstärkungselement, wie beispielsweise eine Haltestange vorgesehen werden, die aufgrund der Feder zwischen dem Stabilisierungselement elastisch gekoppelt ist. Somit können hohe Kräfte, die beispielsweise aufgrund eines Aufpralls wirken, gedämpft werden, ohne dass die Vorrichtung der Dummy Plattform beschädigt werden.

Gemäß einer weiteren beispielhaften Ausführungsform beträgt ein Abstand zwischen einer Oberseite der Plattform und dem Fixierungspunkt mehr als das 1,5 fache der längsten Seite der Oberseite der Plattform beträgt. Trotz der kleinflächigen Plattform im Vergleich zu der Höhe eines Dummys kann mit der erfindungsgemäßen Vorrichtung dennoch eine stabile Befestigung des Dummys an der Plattform erreicht werden und aufgrund der zusätzlichen Verspannung mit der erfindungsgemäßen Vorrichtung durch die Stabilisierungselement das Risiko des Kippens des Dummy-Systems gerade bei schnellen Richtungsänderungen reduziert werden.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben.
Fig. 1 zeigt eine schematische Darstellung eines Dummy-Systems gemäß einer beispielhaften Ausführungsform der vorliegenden Erfindung.
Fig. 2 zeigt eine schematische Darstellung einer Vorrichtung mit einem Hackenelement gemäß einer beispielhaften Ausführungsform der vorliegenden Erfindung.
Fig. 3 zeigt eine schematische Darstellung einer bodennahen Seite einer Plattform mit Einkerbungen gemäß einer beispielhaften Ausführungsform der vorliegenden Erfindung.
Fig. 4 zeigt eine vergrößerte Darstellung der Einkerbungen aus Fig. 3.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

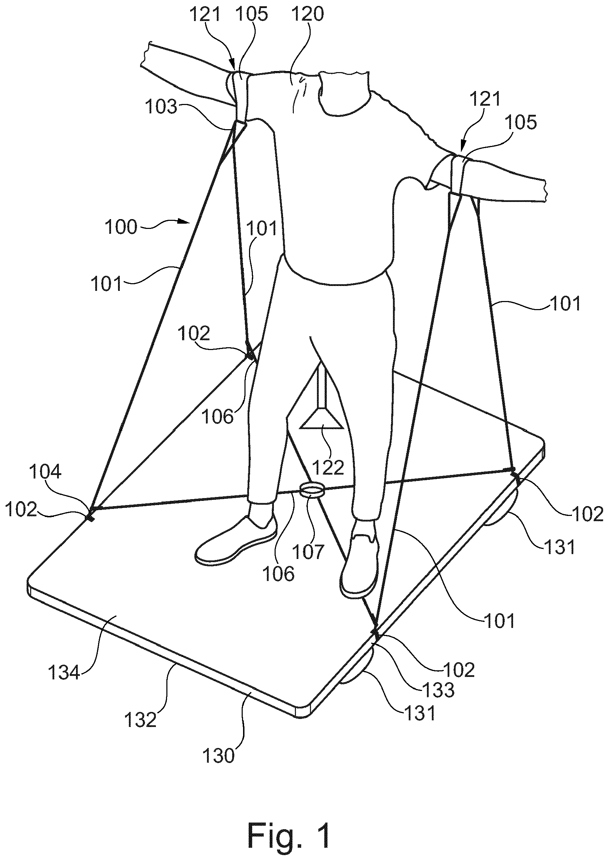

**Fig. 1** zeigt eine schematische Darstellung eines Dummy-Systems gemäß einer beispielhaften Ausführungsform der vorliegenden Erfindung.

Das Dummy-System weist eine (beispielsweise verfahrbare) Plattform 130, einen Dummy 120, welcher auf der Plattform 130 mittels einer Dummybefestigung 122 befestigt ist, sowie eine Vorrichtung 100 zum Stabilisieren des Dummys 120 aufweist. Die Vorrichtung 100 weist ein Stabilisierungselement 101 auf, welches an mindestens einem Fixierungspunkt 121 des Dummys 120, der auf der Plattform 130 fixiert ist, befestigt ist, wobei der Fixierungspunkt 121 an dem Dummy 120 beabstandet zu der Plattform 130 vorliegt. Ferner weist die Vorrichtung 100 eine Kopplungsvorrichtung 102 auf, welche mit dem Stabilisierungselement 101 befestigt ist, wobei die Kopplungsvorrichtung 102 ein Kopplungselement aufweist, welches eine lösbare Befestigung des Stabilisierungselements 101 zwischen dem Dummy 120 und der Plattform 130 ausbildet. In der beispielhaften Darstellung ist das Kopplungselement ausgebildet zum lösbaren Befestigen der Kopplungsvorrichtung 102 an der Plattform 130.

In dem Ausführungsbeispiel aus Figur 1 weist die Vorrichtung 100 insbesondere vier Stabilisierungselemente 101 auf, die mit entsprechenden beabstandeten Kopplungsvorrichtung 102 an der Plattform 130 lösbar befestigt sind. Zwei der Stabilisierungselement 101 sind dabei an einem gemeinsamen Fixierungspunkt 121 (der im Beispiel an einem Schulterbereich eines menschlichen Dummys 120 ausgebildet ist) befestigt.

Die verfahrbare Plattform 130 weist eine bodennahe Seite 132, an welcher ein Rollenelement 131 zum Rollen der Plattform 130 über einem Boden angeordnet ist, eine Oberseite 134, an welcher der Dummy mit der Befestigung 122 befestigbar ist, und eine Randseite 133, welche die bodennahe Seite 132 und die Oberseite 134 verbindet, auf. Die bodennahe Seite 132 und/oder die Randseite 133 können einen Aufnahmeabschnitt, aufweisend zum lösbaren Aufnehmen eines entsprechenden Kopplungselements.

Das Stabilisierungselement 101 ist an der Kopplungsvorrichtung 102 befestigt, womit eine Fixierung an der Plattform 130 ausgebildet ist. Die Stabilisierungselemente 101 sind in der dargestellten Ausführungsform zugkraftübertragende Elemente, wie beispielsweise ein Seil oder ein Draht.

Die Kopplungsvorrichtung 102 befestigt das Stabilisierungselement 101 lösbar an die Plattform 130. Die Kopplungsvorrichtung 102 weist dazu ein Kopplungselemente auf.

Der Fixierungspunkt 121 des Dummys, an welchen ein, oder, wie in der beispielhaften Ausführungsform dargestellt, zwei Stabilisierungselemente 101 befestigt sind, ist insbesondere beabstandet zu der Plattform 130 (mit anderen Worten vertikal beabstandet zu der Plattform 130, wenn diese auf dem Boden aufgelegt ist) ausgebildet. Der Dummy 120 ist ferner mit der Dummybefestigung 122 an der Plattform 130 fixiert. Der Fixierungspunkt 121 mit den Stabilisierungselementen 101 ist insbesondere horizontal, d.h. entlang einer Richtung parallel zur Befestigungsoberfläche 134 der Plattform 130, beabstandet von der Dummybefestigung 121, mit welcher der Dummy 120 an der Plattform 130 befestigt ist, vorgesehen. Die Stabilisierungselemente 101 sind derart mit dem Dummy 120 gekoppelt, dass Kräfte resultierend aus einem Drehmoment des Dummys 120 um die Dummybefestigung 121 durch die Stabilisierungselemente 101 aufgenommen werden.

An einem Ende des Zugelements bzw. des Stabilisierungselements101 ist der Dummy fixierbar und an dem gegenüberliegenden Ende die Kopplungsvorrichtung 102 fixierbar.

In der Ausführungsform in Fig. 1 sind 2 Fixierungspunkte 121 vorgesehen, an welchen jeweils zwei Stabilisierungselemente 101 an einen Bereich des Dummys 120 befestigt sind. In dem dargestellten Beispiel ist der Dummy 120 als menschlicher Körper ausgebildet. Entsprechend kann beispielsweise ein Fixierungspunkt 121 an der rechten Schulter und ein weiterer Fixierungspunkt 121 an der linken Schulter des Dummys 120 ausgebildet werden.

Entsprechend werden zwei Stabilisierungselemente 101 zwischen der rechten Schulter und der Plattform 130 vorgespannt und zwei weitere Stabilisierungselemente 101 zwischen der linken Schulter des Dummys 120 und der Plattform 130 angeordnet und insbesondere vorgespannt. Somit kann der Dummy 120 stabil an der Plattform 130, auch bei Richtungsänderungen während der Bewegung der Plattform, gehalten werden.

Die Kopplungsvorrichtungen 102 sind beabstandet voneinander an der Plattform 130 befestigt. Zwei der an den Kopplungsvorrichtungen 102 befestigten Stabilisierungselemente 101 in an einem gemeinsamen Fixierungspunkt 121 am Dummy 120 befestigt. Somit wird ein Kraftdreieck erzeugt, welches beispielsweise eine Zugkraft resultierend von einer Beschleunigung von den Stabilisierungselementen 101 an einem Fixierungspunkt 121 aufgenommen wird und eine Zugkraft resultierend von einer Verzögerung der Plattform 130 von an anderen Fixierungspunkt 121 aufgenommen wird.

Ferner weist die Vorrichtung ein Befestigungselement 150 auf, an dem ein, oder im vorliegenden Beispiel, zwei Stabilisierungselemente 101 an dem Fixierungspunkt 121 befestigt werden können. Das Befestigungselement 150 kann insbesondere lösbar an den Dummy 120 befestigt werden. Das Befestigungselement 105 wird in dem gezeigten Beispiel als schlaufenförmiges Element ausgebildet, welche einem Bereich des Dummys 120, beispielsweise einen Schulterbereich, teilweise umschließt. Das schlaufenförmige Element kann insbesondere geöffnet und geschlossen werden, beispielsweise mittels einem Reißverschluss oder einem Klettverschluss. Das Befestigungselement 105 ist insbesondere aus einem radartransparenten Material und/oder einem optisch transparenten Material ausgebildet.

Zwischen 2 gegenüberliegenden Stabilisierungselement 101, welche insbesondere mittels Kopplungsvorrichtung in 102 an die Plattform 130 befestigt sind, die an gegenüberliegenden Randbereichen der Plattform 130 befestigt sind, ist ein Verstärkungselement 106, beispielsweise ein elastisches Band, ein Seil oder ein Draht, befestigt. In dem gezeigten Beispiel sind zwei Verstärkungselemente 106 dargestellt, die diagonal gegenüberliegende Stabilisierungselemente 101 bzw. die entsprechenden Kopplungsvorrichtungen 102 miteinander koppeln. Die Verstärkungselemente 106 sind dabei ausgebildet, einen ein Abstand zwischen den Stabilisierungselement 101 einzustellen bzw. zu halten. Die Verstärkungselemente 106 betragen insbesondere Zugkräfte. Dabei verlaufen die Verstärkungselemente 106 insbesondere entlang der Oberseite 134 der Plattform 130 zwischen zwei Stabilisierungselementen 101 bzw. zwischen zwei Kopplungsvorrichtungen 102. Die Verstärkungselemente 106 können beispielsweise elastisch ausgebildet werden.

Ferner kann ein Verstärkungselement 106 zwischen den Befestigungspunkten an den jeweiligen Stabilisierungselementen 101 eine Feder 107 aufweisen. Somit werden die entsprechenden gegenüberliegenden Stabilisierungselemente 101 elastisch auf Abstand gehalten.

In dem dargestellten Beispiel verbinden 2 Verstärkungselemente 106 diagonal gegenüberliegende Stabilisierungselement 101. In dem Kreuzungspunkt der Stabilisierungselemente 101 wird die Feder 107, beispielsweise als Spiralfeder, angeordnet. Somit werden die Stabilisierungselemente 101 in entsprechende Abschnitte unterteilt, die jeweils von der Feder 107 zu dem entsprechenden Stabilisierungselement 101 verlaufen.

Wie Fig. 1 dargestellt, kann die Plattform 130 relativ zu der Höhe eines Dummys 120 relativ klein ausgebildet werden. Ein Abstand (insbesondere entlang der vertikalen Richtung) zwischen einer Oberseite 134 der Plattform 130 und dem Fixierungspunkt 121 von mehr als das 1,5 fache der längsten Seite der Oberseite 134 der Plattform 130 betragen. Trotz der kleinflächigen Plattform 130 im Vergleich zu der Höhe des Dummys 120 kann mit der erfindungsgemäßen Vorrichtung dennoch eine stabile Befestigung des Dummys 120 an der Plattform 130 erreicht werden.

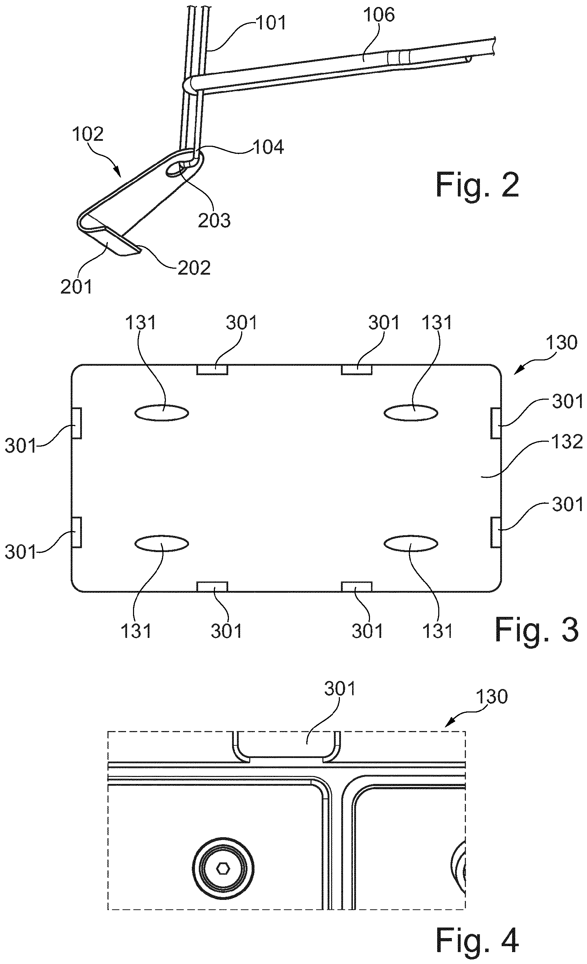

**Fig. 2** zeigt eine schematische Darstellung einer Vorrichtung 100 mit einem Hackenelement 201 als Kopplungselement gemäß einer beispielhaften Ausführungsform der vorliegenden Erfindung. Das Hackenelement 201 an insbesondere an einer Randseite 133 der Plattform 130 oder an einer bodennahen Seite 132 der Plattform 130 befestigt werden. Das Hackenelement 201 umgreift z.B. teilweise einen Rand der Plattform 130, sodass Zugkräfte, welche insbesondere in vertikaler Richtung bzw. in Richtung der Normalen der Oberseite 134 der Plattform 130 wirken, durch das Hackenelement 201 in die Plattform 130 übertragen werden können. Das Hackenelement 201 kann von der Plattform 130 gelöst werden, ohne dass zusätzliche Befestigungsmittel, wie beispielsweise Schraubenverbindungen etc. gelöst werden müssen.

Das Hackenelement 101 ist beispielsweise aus Kunststoff ausgebildet. Durch Ausbildung des Hackenelements 201 aus Kunststoff kann das Gewicht des Hackenelements 201 reduziert werden, wodurch das Risiko von Beschädigungen, die aufgrund des gelösten Hackenelements 101 entstehen könnten, reduziert werden.

Das Hackenelement 201 weist einen flächigen Kontaktbereich 202 zur Kontaktierung mit der Plattform 130, beispielsweise mit der Randseite 133 oder mit der bodennahen Seite 132, auf. Der flächige Kontaktbereich 202 kann eine Fläche von 2 cm² oder mehr aufweisen.

Als Hackenelement 101 weist beispielsweise eine Befestigungsöse 203 zum Befestigen des Stabilisierungselements 101 auf. Durch die Befestigungsöse 203 kann das Stabilisierungselement 101 geführt werden. Wie in Fig. 1 dargestellt, weist das Stabilisierungselement 101 als seil- oder drahtförmiges Element eine Schlaufe auf. Die Schlaufe kann in ihrer Größe, beispielsweise mittels einer Klemmschraube, verändert werden, sodass damit eine Einstellung der Länge des Stabilisierungselements 101 vorgenommen werden kann.

Ferner kann ein Ende des Verstärkungselements 106 durch die Schlaufe des Stabilisierungselements 101 geführt werden, um das Verstärkungselement 106 an das Stabilisierungselement 101 zu befestigen. Entsprechend kann das Verstärkungselement 106 eine Schlaufe, die um das Stabilisierungselement 101 geführt ist, ausbilden, welche ebenfalls in ihrer Größe einstellbar ist, sodass entsprechend die Länge eines Verstärkungselements 106 einstellbar ist.

**Fig. 3** zeigt eine schematische Darstellung einer bodennahen Seite 132 einer Plattform 130 mit Einkerbungen 301 gemäß einer beispielhaften Ausführungsform der vorliegenden Erfindung. **Fig. 4** zeigt eine vergrößerte Darstellung der Einkerbungen 301 aus Fig. 3.

Die Einkerbungen 101 bilden Vertiefungen aus, an welchen beispielsweise das Hackenelement 201 der Vorrichtung 100 lösbar eingreifen kann. Die Tiefe bzw. die Länge und die Breite eine Einkerbung 101 kann entsprechend an die Dimensionen des Hakenelements 201 und insbesondere dessen flächigem Kontaktbereich 302 angepasst werden. Somit waren das Hackenelement 101 exakt justiert und in der Einkerbung 301 geführt werden. Entsprechend kann ein Verrutschen des Hackenelement 201 durch eine exakt angepasste Größe der Einkerbung 301 verhindert werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste:

100 Vorrichtung
101 Stabilisierungselement
102 Kopplungsvorrichtung
103 erstes Ende
104 zweites Ende
105 Befestigungselement
106 Verstärkungselement
107 Feder
120 Dummy
121 Fixierungspunkt
122 Dummybefestigung
130 Plattform
131 Rollenelement
132 bodennahe Seite
133 Randseite
134 Oberseite
201 Hackenelement
202 flächiger Kontaktbereich
203 Befestigungsöse
301 Einkerbung

## Patentansprüche

1. Vorrichtung (100) zum Stabilisieren eines Dummys (120) auf einer, insbesondere statischen oder verfahrbaren, Plattform (130), die Vorrichtung (100) aufweisend
ein Stabilisierungselement (101), welches an mindestens einem Fixierungspunkt (121) des Dummys (120), der auf der Plattform (130) fixiert ist, befestigbar ist,
wobei der Fixierungspunkt (121) an dem Dummy (120) beabstandet zu der Plattform (130) ausbildbar ist,
eine Kopplungsvorrichtung (102), welche mit dem Stabilisierungselement (101) befestigt ist,
wobei die Kopplungsvorrichtung (102) ein Kopplungselement aufweist, welches eine lösbare Befestigung des Stabilisierungselements (101) zwischen dem Dummy (120) und der Plattform (130) ausbildet.

2. Vorrichtung (100) gemäß Anspruch 1,
wobei das Kopplungselement der Kopplungsvorrichtung (102) zum lösbaren Koppeln an der Plattform (130) oder dem Dummy (120) ausgebildet ist.

3. Vorrichtung (100) gemäß Anspruch 1 oder 2,
wobei das Stabilisierungselement (101) einen ersten Stabilisierungsteil, welcher mit der Plattform (130) befestigt ist, und einen zweiten Stabilisierungsteil aufweist, welcher mit dem Dummy (120) befestigt ist,
wobei das Kopplungselement den ersten Stabilisierungsteil mit dem zweiten Stabilisierungsteil lösbar koppelt.

4. Vorrichtung (100) gemäß einem der Ansprüche 1 bis 3,
wobei das Kopplungselement ein Hackenelement (201) aufweist, welches insbesondere an einer Randseite (133) der Plattform (130) oder an einer bodennahen Seite (132) der Plattform (130) befestigbar ist, und/oder
wobei das Kopplungselement ein weiteres Hackenelement aufweist, welches an dem Dummy (120) lösbar befestigbar ist
wobei das Hackenelement (201) insbesondere elastisch verformbar ausgebildet ist,
wobei das Hackenelement (201) insbesondere aus einem Federstahl, aus Kunststoff oder aus einem Faserverbundwerkstoff ausgebildet ist.

5. Vorrichtung (100) gemäß Anspruch 4,
wobei das Hackenelement (201) einen flächigen Kontaktbereich (202) zur Kontaktierung mit der Plattform (130) aufweist.

6. Vorrichtung (100) gemäß Anspruch 4 oder 5,
wobei das Hackenelement (201) im Kontaktbereich (202) ein Schutzelement zum Schützen der Plattform (130) aufweist,
wobei das Schutzelement aus einem weicheren Material, insbesondere einem gummiartigen Material, als der Haken ausgebildet ist,
wobei der Hakenelement (201) insbesondere eine Befestigungsöse (203) zum Befestigen des Stabilisierungselements (101) aufweist.

7. Vorrichtung (100) gemäß einem der Ansprüche 1 bis 6,
wobei das Stabilisierungselement (101) ein zugkraftübertragendes Zugelement, insbesondere ein Seil oder ein Draht, ist,
wobei insbesondere an einem Ende (103) des Zugelements der Dummy (120) fixierbar ist und an dem gegenüberliegenden Ende (104) die Kopplungsvorrichtung (102) fixierbar ist.

8. Vorrichtung (100) gemäß einem der Ansprüche 1 bis 7, ferner aufweisend
ein weiteres Stabilisierungselement (101), welches an einem weiteren Fixierungspunkt (121) des Dummys (120), der auf der Plattform (130) fixiert ist, befestigbar ist,
wobei der weitere Fixierungspunkt (121) an dem Dummy (120) beabstandet zu der Plattform (130) vorliegt,
eine weitere Kopplungsvorrichtung (102), welche mit dem weiteren Stabilisierungselement (101) befestigt ist,
wobei die weitere Kopplungsvorrichtung (102) ein weiteres Kopplungselement aufweist, welches zum lösbaren Befestigen der weiteren Kopplungsvorrichtung (102) an der Plattform (130) ausgebildet ist,
wobei insbesondere das Stabilisierungselement (101) und das weitere Stabilisierungselement (101) an beabstandeten Fixierungspunkten an dem Dummy (120) befestigbar sind.

9. Vorrichtung (100) gemäß Anspruch 8,
wobei das Stabilisierungselement (101) und das weitere Stabilisierungselement (101) an einem gemeinsamen Fixierungspunkt (121) an dem Dummy (120) befestigbar sind.

10. Vorrichtung (100) gemäß einem der Ansprüche 1 bis 9, ferner aufweisend
ein Befestigungselement (105) zum Befestigen des Stabilisierungselements (101) und des weiteren Stabilisierungselements (101), wobei das Befestigungselement (105) an dem Fixierungspunkt (121) des Dummys (120), insbesondere lösbar, befestigbar ist.

11. Vorrichtung (100) gemäß einem der Ansprüche 1 bis 10, ferner aufweisend
ein Verstärkungselement (106), welches zwischen dem Stabilisierungselement (101) und dem weiteren Stabilisierungselement (101) derart befestigt ist, dass ein Abstand zwischen dem Stabilisierungselement (101) und dem weiteren Stabilisierungselement (101) einstellbar ist,
wobei das Verstärkungselement (106) insbesondere elastisch ausgebildet ist.

12. Vorrichtung (100) gemäß Anspruch 11,
wobei das Verstärkungselement (106) eine Feder (107), insbesondere eine Spiralfeder oder eine Schraubenfeder, derart aufweist, dass das Stabilisierungselement (101) und das weiteren Stabilisierungselement (101) elastisch beabstandet ist.

13. Dummy-System, aufweisend
eine, insbesondere statische oder verfahrbare Plattform (130),
einen Dummy (120), welcher auf der Plattform (130) befestigt ist,
eine Vorrichtung (100) gemäß einem der Ansprüche 1 bis 15,
wobei das Stabilisierungselement (101) an dem Fixierungspunkt (121) des Dummys (120) befestigt ist,
wobei das Kopplungselement eine lösbare Befestigung des Stabilisierungselements (101) zwischen dem Dummy (120) und der Plattform (130) ausbildet.

14. Dummy-System gemäß Anspruch 13,
wobei ein Abstand zwischen einer Oberseite (134) der Plattform (130) und dem Fixierungspunkt (121) mehr als das 1,5 fache der längsten Seite der Oberseite (134) der Plattform (130) beträgt,
wobei die Plattform (130) insbesondere eine bodennahe Seite (132), eine Oberseite (134), an welcher der Dummy (120) befestigbar ist, und eine Randseite (133), welche die bodennahe Seite (132) und die Oberseite (134) verbindet, aufweist,
wobei die bodennahe Seite (132) und/oder die Randseite (133) einen Aufnahmeabschnitt, insbesondere eine Einkerbung (301), zum, insbesondere lösbaren, Aufnehmen des Kopplungselements aufweist,
wobei insbesondere die Plattform (130) an der bodennahen Seite (132) ein Rollenelement (131) zum Rollen der Plattform (130) über einem Boden aufweist.

15. Verfahren zum Stabilisieren eines Dummys (120) auf einer, insbesondere statischen oder verfahrbaren, Plattform (130), das Verfahren aufweisend
Befestigen eines Stabilisierungselements (101) an einem Fixierungspunkt (121) des Dummys (120), der auf der Plattform (130) fixiert ist,
wobei der Fixierungspunkt (121) an dem Dummy (120) beabstandet zu der Plattform (130) vorliegt,
Befestigen einer Kopplungsvorrichtung (102) mit dem Stabilisierungselement (101),
lösbares Befestigen des Stabilisierungselements (101) zwischen dem Dummy (120) und der Plattform (130) mittels eines Kopplungselements der Kopplungsvorrichtung (102).
